# EUROPÄISCHE PATENTSCHRIFT

(11) **EP 3 935 441 B1**
(45) Veröffentlichungstag und Bekanntmachung des Hinweises auf die Patenterteilung: **23.08.2023**
(21) Anmeldenummer: 20714118.5
(22) Anmeldetag: 05.03.2020
(51) Int. Cl.: H04N 17/00, G02B 27/62, G02B 27/36

(54) **KOLLIMATOR**
COLLIMATOR
COLLIMATEUR

(30) Priorität: 06.03.2019 DE 102019105622
(43) Veröffentlichungstag der Anmeldung: 12.01.2022
(73) Patentinhaber: KONRAD GmbH, 78315 Radolfzell (DE)
(72) Erfinder: KONRAD, Michael, 78315 Radolfzell (DE); URBAN, Claus, 8248 Uhwiesen (CH)
(74) Vertreter: Patentanwälte und Rechtsanwalt Weiß, Arat & Partner mbB
(86) Internationale Anmeldenummer: PCT/EP2020/055795
(87) Internationale Veröffentlichungsnummer: WO 2020/178366

(56) Entgegenhaltungen:
- EP-A1- 3 076 148
- EP-A2- 2 148 501
- DE-A1-102013 212 097
- JP-A- S57 172 221

## Beschreibung

### Technisches Gebiet

Die Erfindung betrifft einen Kollimator nach dem Oberbegriff des Anspruchs 1.

### Stand der Technik

Derartige Kollimatoren sind bereits in vielfältiger Form und Ausgestaltung bekannt und gebräuchlich. So wird beispielsweise in der DE 10 2007 003 681 A1 ein Verfahren und eine Vorrichtung zur Analyse einer optischen Einrichtung offenbart. Dabei erzeugt eine Beleuchtungseinrichtung einen Prüfstrahl, welcher von einer optischen Einrichtung und einer ortsauflösenden Sensoreinrichtung detektiert wird, wobei sie in einer Referenzposition zueinander angeordnet werden.

Weiter wird auf die EP 3 076 148 A1 verwiesen, welche einen Kollimator offenbart, bei dem der Kollimator mit einer Strichplatte und einem Bildsensor sowie eine Verarbeitungseinheit versehen ist, wobei der Kollimator das optische Abbildungssystem derart beleuchtet, und ein Testmuster eine Längsrichtung aufweist und diese Längsrichtung mit einer optischen Achse des Kollimators einen Winkel ungleich 90° einschließt. Auch wird auf die EP 2 148 501 A2, die DE 10 2013 212 097 A1 und die JP S57 172221 A verwiesen, welche einen Kollimator mit einem vergleichbaren Aufbau aufweist und dabei einen Winkel gleich 90° offenbart.

Ferner ist die WO 99/50636 A1 anzuführen, welche zeigt, dass sich ein Kollimatorgehäuse üblicherweise über eine am Ende befindliche Linse hinaus erstreckt.

Weiter wird auf die DE 10 2004 056 723 A1 hingewiesen, welche eine Vorrichtung zur geometrischen Kalibrierung eines orthoelektronischen Sensorsystems offenbart, welche insbesondere für digitale Kameras zum Einsatz kommen soll. Dabei werden die Signale der fotosensitiven Sensoren in einer Auswerte- und Steuereinheit erfasst.

In der DE 10 2014 209 040 A1 wird ein Verfahren zur Kalibrierung eines Meßgeräts offenbart, wobei Meßsignale erzeugt und bestimmt werden und der Vorgang bis zu sechsmal wiederholt wird, um das zu messende Gerät zu testen.

Zusätzlich wird auf die DE 10 2004 020 881 A1 hingewiesen. Dort ist ein Verfahren und eine Vorrichtung zum geometrischen kalibrieren einer orthoelektronischen Meßbildkamera offenbart, wobei eine kohärente monochromatische Lichtquelle und mindestens ein Mittel zur Erzeugung einer definierten Teststruktur vorhanden ist und ihr erzeugte Teststruktur über die Optik der Meßbildkamera auf deren Fokalebene abgebildet wird, wobei das Mittel als Spaltsblende ausgebildet ist.

Außerdem wird auf die 198 23 844 C1 hingewiesen. Dort ist ein Linsen-Prüfgerät offenbart, welches eine an einem Stativ angebrachte Halterung zur Aufnahme eines linken Prüflings aufweist und ein rückseitig beleuchtetes Testobjekt sowie ein abbildendes Objektiv und eine Detektoreinrichtung zur Auswertung des Bildes des Testobjekt vorhanden ist. Dabei ist das Objektiv mit der Detektoreinrichtung zu einer Einheit zusammengefasst, wobei der Linsen-Prüfling ein Objektiv-Prüfling ist, das Testobjekt in der Brennebene des Objektiv-Prüflings innerhalb der Halterung angeordnet ist und das abbildende Objektiv ein Kollimator-Objektiv ist.

Kollimatoren werden eingesetzt, um die Qualität von Kameras, zusammengesetzt aus einem lichtempfindlichen Sensorelement und einer bildgebenden Optik, zu bestimmen. Insbesondere können Kollimatoren dazu verwendet werden, um die Bauteile bildgebende Optik und lichtempfindliches Sensorelement während deren Zusammenbau zur Kamera zueinander geometrisch auszurichten. Nach dem Ausrichten werden die Bauelemente der Kamera fixiert, beispielsweise durch Verkleben mit durch ultraviolettes Licht aushärtbare Klebestoffe.

Eine hervorstehende Eigenschaft von Kollimatoren ist, dass ein örtlich begrenztes mustertragendes Element lokalisiert in der Objektebene des Kollimators, Reticle genannt, für die Kamera in einer bestimmten einstellbaren Entfernung erscheint.

Ein Kollimator besteht aus einer Beleuchtungseinheit, welche ein mustertragendes optisches Element, ein sogenanntes Reticle beleuchtet. Die von diesem Reticle emittierten Lichtstrahlen werden dann durch eine Optik, oft als Linsensystem ausgeführt, in den Arbeitsabstand des Kollimators abgebildet. Dabei kann der Arbeitsabstand des Kollimators durch die Verschiebung der Optik oder des Linsensystems zum Reticle eingestellt werden. Als Beispiel werden in der Einstellung des Arbeitsabstands auf Unendlich von jedem Objektpunkt auf den Reticle an Ausgang des Kollimators parallele Strahlbündel erzeugt. Wäre das Reticle als Pinhole ausgeführt, so erhielte man am Kollimatorausgang ein paralleles Strahlbündel - einen kollimierten Lichtstrahl, der sich entlang der optischen Achse des Kollimators ausbreitet. Unter der Voraussetzung einer diffusen Beleuchtung des Reticles ist der Durchmesser dieses kollimierten Lichtstrahls durch die Apertur der Linse oder des Linsensystems begrenzt. Der Arbeitsabstand des Kollimators ist im Bezug zum Arbeitsabstand der damit zu prüfenden Kamera negiert. Der Arbeitsabstand einer Kamera ist positiv für Objekte, die sich in einer Entfernung vor der Kamera befinden, beispielsweise bildet eine Kamera mit Arbeitsabstand 1 m Objekte in eben diesem Abstand mit dem besten Kontrast ab. Der hierfür verwendete Kollimator besitzt den Arbeitsabstand von -1 m.

Für ein beliebiges Muster des Reticles wird für jeden lichtemittierenden Punkt ein ebensolcher kollimierter Lichtstrahl am Kollimatorausgang erzeugt, nur unter einem zur optischen Achse des Kollimators geneigten Richtung, die durch die Position des Punktes auf dem Reticle und der Brennweite der Linse oder des Linsensystems bestimmt ist. Es gilt für die Richtung des Lichtstrahls tan(alpha) = x/f und tan(beta) = y/f mit f der Brennweite der Optik oder der Gesamtbrennweite des Linsensystems, x der Distanz des Punktes von der optischen Achse in x-Richtung und y der Distanz des Punktes von der optischen Achse in y-Richtung. X- und y-Richtung bilden dabei mit der optischen Achse ein orthogonales Koordinatensystem. Vorausgesetzt wird hierbei zur Vereinfachung der Beschreibung, dass die Oberfläche des Reticles senkrecht zur optischen Achse steht. Für ein ausgedehntes Reticle wird vom Ausgang des Kollimators an das Licht divergieren, die Abmessung des Lichtbündels mit steigender Entfernung zunehmen.

Eine vor einem Kollimator auf dessen optischer Achse platzierte Kamera bildet das Reticle ab. Dabei entspricht der von der Kamera gesehene Abstand zum Reticle dem eingestellten Arbeitsabstand des Kollimators. Eine scharfe Abbildung erhält man, wenn die Arbeitsabstände des Kollimators und der Kamera oder auch deren Fokuseinstellung übereinstimmen. Dies ist unabhängig vom Abstand zwischen Kollimator und Kamera. Es ist aber zu beobachten, dass die Bildgröße der Reticles auf der Kamera mit steigender Kollimator zu Kamera Distanz abnimmt. Dies ist durch den vorher angeführten Effekt zu erklären, dass Lichtstrahlen von Bereichen des Reticles mit einem Abstand zur optischen Achse sich unter einen Winkel zur optischen Achse ausbreiten und dadurch ab einer gewissen Entfernung nicht mehr die Kameraeintrittspupille treffen.

Im Stand der Technik wird angeführt, dass Kollimatoren eine Brennweite von f = 100 mm oder vorzugsweise größer besitzen. Ebenfalls ist eine möglichst große Austrittsapertur des Kollimators gewünscht, also einen möglichst großen Durchmesser. Werte für den Durchmesser im Bereich 30 mm sind üblich. Diese können ohne Einschränkung nach oben und unten abweichen.

Um Abbildungen an mehreren Stellen im Bild einer Kamera zu erhalten, werden Kollimatoren zu Gruppen angeordnet, wobei meistens ein Kollimator auf der optischen Achse vor der Kamera platziert ist und weitere Kollimatoren unter verschieden Winkeln in Azimuth und Elevation meistens gleichmäßig auf das Bildfeld der Kamera verteilt sind.

Im Einsatz einer Kollimatorgruppe zur Justage einer Kamera wird dann das Kameraobjektiv zum Bildsensor so justiert, dass möglichst alle Abbildungen der verschiedenen Kollimatoren auf vorher berechneten Positionen in Bild scharf abgebildet sind. Häufig wird dazu eine Anordnung von fünf Kollimatoren in einer Gruppe verwendet, wobei ein Kollimator auf der optischen Achse der Kamera und vier Kollimatoren auf den Bilddiagonalen unter etwa 70 Prozent des Öffnungswinkels der Kamera angeordnet sind.

Ein besonderes Einsatzgebiet ist die Kameramontage in Hinsicht auf die Justage des Objektivs zum Bildsensor und deren permanente Fixierung in automatisierten Produktionslinien in der Massenproduktion beispielsweise im Automotive Bereich. Bedingt durch die hohen Stückzahlen und den Kostendruck in der Produktion ergeben sich hier besondere Anforderungen für den Kameramontageprozess.

In der Kamerajustage werden MTF Kurven in sechs Freiheitsgraden schrittweise abgefahren. Dies sind der Fokusabstand z und die beiden Kippwinkel der Sensoroberfläche, für welche eine Abhängigkeit der MTF Werte besteht. Die weiteren Freiheitsgrade, die lateralen Verschiebungen x und y und die Rotation um die optische Achse, besitzen dagegen in erster Näherung keinen Einfluss auf die gemessenen MTF Werte, bestimmen aber die Zentrierung und Rotation des Bildsensors zur Geometrie eines Referenzachsensystems bestimmt durch die Kollimatoranordnung. Für jeden Schritt wird ein Bild aufgenommen und analysiert. So ergibt sich eine Funktion der gemessenen MTF-Werte vom jeweiligen Parameter - z und den beiden Kippwinkeln. Die Idealposition ist bestimmt durch die Positionen der Maxima der jeweiligen Kurven. Der Justageprozess nach Stand der Technik ist dadurch sehr zeitaufwendig.

### Aufgabe der Erfindung

Die Aufgabe der vorliegenden Erfindung ist es, die Nachteile aus dem Stand der Technik zu überwinden. Der Justageprozess eines Objektivs zum Bildsensor soll aufgrund einer einzigen Bildaufnahme oder mit einer im Vergleich zum Stand der Technik reduzierten Zahl an Bildaufnahmen möglich sein, wodurch der Justageprozess im Vergleich zum Stand der Technik schneller durchgeführt werden kann. Kollimatoren sind nach dem Stand der Technik groß. Dadurch können diese nur in Gruppen zusammengefasst werden, dass sich die Durchmesser vorne nicht berühren. Somit ist der Abstand Kollimator zu Kamera auch groß, was die Ausmaße der Gesamtkonstruktion weiter vergrößert.

### Lösung der Aufgabe

Zur Lösung der Aufgabe führen die Merkmale nach dem Anspruch 1.

Vorteilhafte Ausgestaltungen sind in den Unteransprüchen beschrieben.

Die Verbesserung zum Stand der Technik wird erreicht, indem die Objektebene des Kollimators, auf der sich das Reticle befindet, gegenüber der optischen Achse um einen von 90 Grad abweichenden Winkel geneigt ist in Verbindung mit einer kurzen Brennweite der Kollimationsoptik, wobei diese Brennweite ähnlich der Brennweite des Objektivs der zu untersuchenden Kamera ist. Es ist dabei hervorzuheben, dass nur die angeführte Kombination das erwünschte Resultat liefert. Insbesondere für kleine Brennweiten von etwa 1 mm bis 10 mm, wie sie häufig für Kameras im Automotiv Bereich verwendet werden, ist eine solche Ausführung nicht durch den Stand der Technik möglich. Als Reticle wird beispielsweise ein Fadenkreuz verwendet, bei dem eine Linie entlang der Kippachse der Objektebene und die zweite Linie senkrecht dazu angeordnet sind. Für den letzteren Fall ergibt sich eine Variation des Arbeitsabstands des Kollimators entlang der Richtung senkrecht zur Kippachse der Objektebene.

Für die vor dem Kollimator platzierte Kamera ist die resultierende Abbildung nur in dem Bildbereich scharf, in dem der effektive Arbeitsabstand des Kollimators mit dem Arbeitsabstand der Kamera übereinstimmen. In diesem Beispiel ist das für eine Linie von Pixeln auf dem Kamerabild zutreffend, welche die Orientierung parallel zur Kippachse des Kollimators besitzt und für welche die Arbeitsabstände des Kollimators und der Kamera übereinstimmen. Diese Linie kann sich an einer beliebigen Position innerhalb oder auch außerhalb des Kamerabildes befinden.

Bereiche, die sich neben dieser Linie der schärfsten Abbildung befinden, werden im Kamerabild unscharf abgebildet. Als direkte Folge dieses Verhaltens wird die geneigte Linie des Fadenkreuzes eine dünnste Stelle besitzen, bei der die Arbeitsabstände des Kollimators und der Kamera übereinstimmen, und von dieser dünnsten Stelle aus nimmt die Linienbreite in beide Richtungen zu.

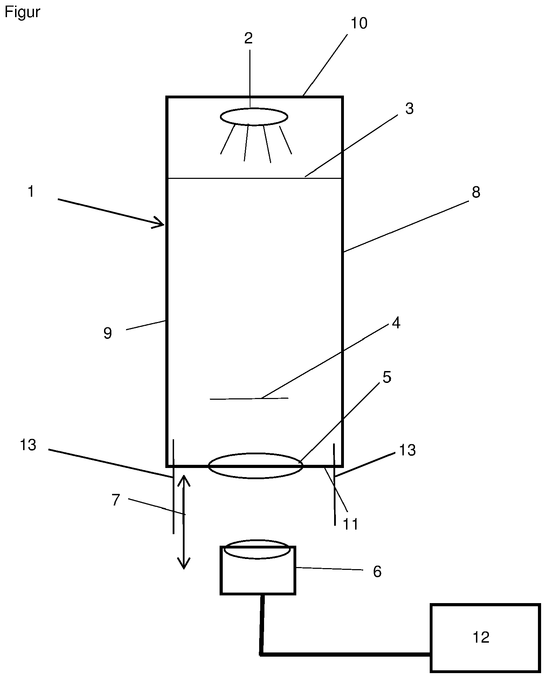

Die zur geneigten Linie des Kollimators senkrecht stehende Linie besitzt die Breite, welche der geneigten Linie am Schnittpunkt beider Linien entspricht. Diese Linie ist unter der Voraussetzung, dass die optischen Achsen des Kollimators und der Kamera zueinander ausgerichtet sind, in der Mitte des Kamerabildes platziert. Die Kamerajustage hinsichtlich maximaler Bildschärfe an der Bildstelle der Kamera mit der Abbildung des Kollimatormusters, ist erreicht, wenn diese Linie die geneigte Linie an derer schmalster Stelle schneidet. Ohne Einschränkung erlaubt das Verfahren auch einen Offset im Bezug zur Position der maximalen Bildschärfe einzustellen.

Durch die Lage der schmalsten Stelle der geneigten Linie im Bild ist eindeutig ersichtlich, ob sich das Kameraobjektiv im Bezug zum Bildsensor vor der optimalen Position oder dahinter befindet. Ebenfalls besteht ein Zusammenhang zwischen der Linienbreite und dem realen Abstand des Objektivs von dieser optimalen Position im Bezug zum Bildsensor. Dadurch ist es mit einer Bildaufnahme möglich die Distanz und die Richtung für die Justage des Kameraobjektivs im Bezug zum Bildsensor zu bestimmen.

Für eine Kamerajustage werden mehrere Kollimatoren in einer Gruppe angeodnet mit definierter Geometrie zur Kamera verwendet. Diese Anordnung ist möglich unter Verwendung von Mikroobjektiven. Dadurch wird erreicht, dass die Anforderung an eine kurze Brennweite erfüllt ist und mit der geometrischen Anordnung der Kollimatoren in der Kollimatorgruppe und dem entsprechenden Platzbedarf konform ist.

Dadurch wir die Kameramontage deutlich schneller, da keine MTF-Kurven schrittweise abgefahren werden müssen.

Der Effekt eines geneigten Reticles wird umso deutlicher sichtbar, je näher die Brennweite des Kollimators an der Brennweite des Kameraobjektivs ist. Typische Brennweiten von Kameraobjektiven im Automotive Bereich bewegen sich zwischen etwa 1 mm und 10 mm. Die Größe d_Bild des Bildes des Reticles auf der Kamera kann durch das Verhältnis der Brennweiten des Kollimators f_Koll und der Kamera f_Kam in erster Näherung angegeben werden. Effekte, wie eine auftretende Verzeichnung, werden dabei nicht berücksichtigt. Für die Reticlegröße d_Ret folgt d_Bild = d_Ret x f_Kam / f_Koll. Weiterhin kann die maximal erreichbare Defokussierung entlang der geneigten Linie des Reticles aus der Gleichung 1/f = 1/s_Objekt + 1/s_Bild berechnet werden. Beispielswerte sind in der folgenden Tabelle angegeben. Hierbei ist das Reticle um 45° geneigt und alle Strahlen treffen die Eintrittspupille der Kamera.

| | | |
|---|---|---|
| Brennweite *f*_Koll | 100 mm | 10 mm |
| Brennweite *f*_Kam | 1 mm | 1 mm |
| Reticlegröße *d*_Ret | 10 mm | 10 mm |
| Bildgröße *d*_Bild | 0,1 mm | 1 mm |
| Maximaler Defokus Kamerabild | 0,5 µm | 91 µm |

Ein Kollimator für diese Aufgabe muss also klein sein und eine Brennweite im Bereich von etwa 10 mm besitzen. Dazu werden Mikroobjektive eingesetzt. Diese können in einer Gruppe in einigen mm Entfernung von der Kamera angeordnet werden.

Nur in dieser Kombination mit Mikroobjektiven ist die Verwendung geneigter Reticles effektiv möglich, so dass auf der Kamera aus einem Bild die Position des Objektivs bestimmt und justiert werden kann.

Zur Vergrößerung der Abbildung eines Kollimators auf der Kamera werden mit einem optischen System die vom Kollimator nach außen laufenden Lichtstrahlen ohne Änderung der Divergenz der einzelnen Strahlbündel bzw. ohne einer Änderung des Arbeitsabstands des Kollimators, zur Eintrittspupille des Kameraobjektivs geleitet.. Dadurch erweitert sich der Messbereich. Eine Ausführung des optischen Systems ist eine Anordnung von Spiegeln zwischen dem Kollimatorobjektiv und de Kamera. Die Spiegelflächen stehen vorzugsweise parallel zur optischen Achse des Kollimators und senkrecht zur lateralen Ausbreitungsrichtung der Reticlemuster, im Falle eines Fadenkreuzes sind vier Spiegel senkrecht zur Ausbreitungsrichtung in x und y der Linien angeordnet. Dadurch werden Strahlen zur Kamera geleitet, die ohne Spiegeloptik nicht die Eintrittspupille der Kamera treffen würden. Im Kamerabild erscheinen diese Teile in Verlängerung der Linien des Fadenkreuzes aber gespiegelt an dessen Kreuzungspunkt. Eine weitere Ausführung des optischen Systems ist eine afokale Optik, welche zwischen Kollimatorobjektiv und Kamera angeordnet wird und die vom Kollimator ausgehenden Lichtstrahlen zur Kamera leiten ohne den Arbeitsabstand des Kollimators zu ändern. Im Kamerabild erscheint das Bild des Fadenkreuzes größer. Durch optische Aberrationen dieser Optiken auftretende kleine Beeinflussungen des Arbeitsabstands schränken die Benutzung dieser Optiken nicht ein, solange der Einfluss auf die Prüfung oder Justage der Kamera vernachlässigbar ist. Die optischen Systeme können alternativ auch in den Kollimator integriert werden.

Die Realisierung eines kompakten Systems für die Kameramontage ist realisiert.

Das kompakte System zur Kameramontage ist kostengünstig.

Das kompakte System zur Kameramontage ist modular und erlabt einen einfachen Austausch in einer Kameramontagelinie zur Umrüstung auf verschiedene Kameravarianten.

Der erfindungsgemäße Kollimator dient zur Testung einer Kamera. Dabei handelt es sich um eine CMOS Kamera, eine CCD-Kamera, eine analoge Kamera oder anderen Kameras. Dazu weist der Kollimator ein Kollimatorgehäuse auf. Das Kollimatorgehäuse ist dabei eine höhere oder eine drei bis vierwändige zylindrische Konstruktion. Dabei handelt es sich um Längswandungen. Die Zylinderkonstruktion ist an beiden Enden geschlossen, um im Inneren des Kollimatorgehäuse eine Abschirmung gegenüber Umgebungslicht zu erreichen und eine Verfälschung der durch die Lichtquelle erzeugten Lichtstrahlen zu verhindern.

Die beiden geschlossenen Endungen sind im Rahmen der Erfindung als Stirnwandungen bezeichnet. Dabei weist die erste Stirnwandung eine Lichtquelle auf und die zweite Stirnwandung umfasst eine Optik. Weiter ist in dem Kollimatorgehäuse zwischen der Optik und der Lichtquelle ein Reticle angeordnet ist. Das Reticle weist dabei ein aufgedruckte Muster oder ein Bild oder eine andere Targetapplikation auf, deren Informationen in einem Rechner hinterlegt sind.

Dabei ist das Reticle in dem Kollimatorgehäuse schräg zu der Optik und/oder schräg zu der Längswandung angeordnet. Schräg bedeutet in diesem Zusammenhang nicht-parallel. Dabei ist ein Kante oder eine Ecke des Reticle näher an der Optik angeordnet, als die übrigen Ecken oder Kanten. Dies hat den Vorteil, dass das auf dem Reticle gezeigte Muster, Bild oder Targetapplikation durch die unterschiedlichen Entfernungen zu der Optik das Muster gleichzeitig in verschiedenen Entfernungen zu der Optik zeigt und der Kamera dadurch eine zielgerichtete und schnellere Einrichtung erlaubt.

Zwischen dem Reticle und der Lichtquelle ist ein Diffusor (3) angeordnet. Der Diffusor bewirkt, dass die von der Lichtquelle ausgesandten Lichtstrahlen in einer definierten Strahlung im Kollimatorgehäuse ein definiertes Licht erzeugt. Ohne Einschränkung kann die Beleuchtung des Reticles auch mit anderen Beleuchtungsverfahren stattfinden.

Die innere Wandung des Beleuchtungsvolumens vor dem Reticle kann reflektierend ausgeführt werden. Die Spiegelung bewirkt, dass die Lichtstrahlen der Lichtquelle, welche durch den Diffusor emittieren von den Längswandungen zurückgeworfen werden. Dies hat den Vorteil, dass die Gesamtlänge des Kollimatorgehäuses weiter verringert werden kann.

Die Kamera ist verstellbar. Das bedeutet, dass die Kamera zu der Linse hin verstellbar oder von der Linse weg verstellbar bzw. anordenbar ist. Dabei wird die Kamera eingestellt und deren Parameter und der ideale Abstand zu der Linse im Rechner erfasst.

Weiter wird gesondert Schutz für ein Verfahren zum Testen einer Kamera begehrt. Dabei wird der Kollimator mit folgenden Schritten zum Testen der Kamera eingesetzt:
- die Lichtquelle beleuchtet den schräg angeordneten Reticle;
- die Kamera nimmt ein vom Reticle erzeugte Bild über die Linse auf;
- die Kamera wird zu der Linse hin- oder wegverschoben, wobei der Rechner dabei einen IST-/SOLL-Abgleich vornimmt.

Die Lichtquelle leuchtet dabei durch den Diffusor um definierte Verhältnisse in dem Kollimatorgehäuse zu erzeugen.

### Figurenbeschreibung

Weitere Vorteile, Merkmale und Einzelheiten der Erfindung ergeben sich aus der nachfolgenden Beschreibung eines bevorzugte Ausführungsbeispiels sowie anhand der einzigen Zeichnung; diese zeigt in der Figur eine schematisch Schnittzeichnung des erfindungsgemäßen Kollimators.

### Ausführungsbeispiel

In der Figur ist ein Kollimatorgehäuse 1 dargestellt. Das Kollimatorgehäuse 1 besteht im gezeigten Ausführungsbeispiel aus vier Längswanderungen, wobei hier die erste Längswandung 8 und die zweite Längswandung 9 gezeigt sind. Die beiden Längswandungen 8,9 sind einends über eine erste Stirnwandung 10 und andernends eine zweite Stirnwandung 11 aufweist.

Dabei umfasst die erste Stirnwandung 10 eine Lichtquelle 2. Die zweite Stirnwandung 11 umfasst eine Linse 5.

Außerdem umfassen die beiden Längswandungen 8, 9 eine Spiegelung 13, wobei die Spiegelung 13 auf der Innenseite des Kollimatorgehäuse S1 angebracht sind, um von der Lichtquelle 2 emmitierende Lichtstrahlen gegebenenfalls zu spiegeln. Die Spiegelung 13 erstreckt sich in dem gezeigten Ausführungsbeipiel aus dem Kollimatorgehäuse 1 hinaus hin zu der Kamera 6. In einem anderen Ausführungsbeispiel ist die Spiegelung ausschließlich an den Längswandungen 8, 9.

Außerdem ist in dem Kollimatorgehäuse 1 ein Diffusor 3 zwischen einem Reticle 4 und der Lichtquelle 2 angeordnet. Das Reticle 4 ist in dem gezeigten Ausführungsbeispiel schräg zu der Linse 5 angeordnet. Es ist auch schräg zu der zweiten Stirnwandung 11 oder zu einer der Längswandungen 8, 9 angeordnet.

Weiter ist durch eine Verschieberichtung 7 angedeutet, wie eine Kamera 6 zu der Linse 5 hin verschoben werden kann oder von der Linse 5 weg verschoben werden kann. Weiter ist gezeigt, dass die Kamera 6 mit einem Rechner 12 verbunden ist. Dabei ist der Rechner 12 derart ausgelegt, dass die von der Kamera 6 aufgenommenen Bilder in einem IST-/SOLL-Abgleich aufgenommen und mit den vom Reticle 4 hinterlegten Daten verglichen werden.

Dabei kann die Kamera 6 durch eine nicht näher gezeigte Vorrichtung zu der Linse 5 hin- oder wegverschoben werden.

**Bezugszeichenliste**

| | |
|---|---|
| 1 | Kollimatorgehäuse |
| 2 | Lichtquelle |
| 3 | Diffusor |
| 4 | Reticle |
| 5 | Linse |
| 6 | Kamera |
| 7 | Verschieberichtung |
| 8 | Erste Längswandung |
| 9 | Zweite Längswandung |
| 10 | Erste Stirnwandung |
| 11 | Zweite Stirnwandung |
| 12 | Rechner |
| 13 | Spiegelung |
| 14 | |
| 15 | |
| 16 | |
| 17 | |
| 18 | |
| 19 | |
| 20 | |

## Patentansprüche

1. Kollimator zur Testung einer Kamera (6) mit einem Kollimatorgehäuse (1), wobei das Kollimatorgehäuse (1) eine Längswandung (8, 9) und zwei Stirnwandungen (10, 11) aufweist, wobei die erste Stirnwandung (10) eine Lichtquelle (2) aufweist und die zweite Stirnwandung (11) eine Linse (5) aufweist, wobei zwischen der Linse (5) und der Lichtquelle ein Reticle (4) angeordnet ist,
wobei das Reticle (4) in dem Kollimatorgehäuse (1) schräg zu der Linse (5) und/oder schräg zu der Längswandung (8, 9) angeordnet ist, **dadurch gekennzeichnet, dass** die Längswandung (8, 9) eine Spiegelung (13) aufweist, die eine Anordnung von Spiegeln zwischen einem Kollimatorobjektiv und der Kamera (6) ist, um Strahlen zur Kamera (6) zu leiten, die ohne Spiegeloptik nicht eine Eintrittspupille der Kamera (6) treffen würden,wobei die Spiegelung (13) sich aus dem Kollimatorgehäuse (1) hinaus hin zu der Kamera (6) erstreckt.

2. Kollimator nach Anspruch 1, **dadurch gekennzeichnet, dass** zwischen dem Reticle (4) und der Lichtquelle (2) ein Diffusor (3) angeordnet ist.

3. Kollimator nach einem der vorigen Ansprüche, **dadurch gekennzeichnet, dass** die Kamera (6) mit einem Rechner (12) verbunden ist.

4. Kollimator nach einem der vorigen Ansprüche, **dadurch gekennzeichnet, dass** die Kamera (6) verstellbar ist.

5. Verfahren zum Testen einer Kamera (6) mit einem Kollimator nach den Ansprüchen 1 bis 4 **gekennzeichnet durch** folgende Schritte:
- die Lichtquelle (2) beleuchtet den schräg angeordneten Reticle (4);
- die Kamera (6) nimmt ein vom Reticle (4) erzeugte Bild über die Linse (5) auf;
- die Kamera (6) wird zu der Linse (5) hin- oder wegverschoben, wobei der Rechner (12) dabei einen IST-/SOLL-Abgleich vornimmt.

6. Verfahren nach Anspruch 5, **dadurch gekennzeichnet, dass** die Lichtquelle (2) durch den Diffusor (3) leuchtet.

## Claims

1. Collimator for testing a camera (6) with a collimator housing (1), wherein the collimator housing (1) has a longitudinal wall (8, 9) and two end walls (10, 11), wherein the first end wall (10) has a light source (2) and the second end wall (11) has a lens (5), wherein a reticle (4) is arranged between the lens (5) and the light source (2), wherein the reticle (4) is arranged in the collimator housing (1) obliquely to the lens (5) and/or obliquely to the longitudinal wall (8, 9),
**characterized in that**
the longitudinal wall (8, 9) has a mirroring (13), which is an arrangement of mirrors between a collimator lens and the camera (6), in order to guide rays to the camera (6) which would not hit an entrance pupil of the camera (6) without mirror optic, wherein the mirroring (13) extends out of the collimator housing (1) towards the camera (6).

2. Collimator according to claim 1, **characterized in that** a diffuser (3) is arranged between the reticle (4) and the light source (2).

3. Collimator according to any of the previous claims, **characterized in that** the camera (6) is connected to a computer (12).

4. Collimator according to one of the previous claims, **characterized in that** the camera (6) is adjustable.

5. Method for testing a camera (6) with a collimator according to claims 1 to 4, **characterized by** the following steps:
- the light source (2) illuminates the obliquely arranged reticle (4);
- the camera (6) captures an image generated by the reticle (4) through the lens (5);
- the camera (6) is shifted towards or away from the lens (5), whereby the computer (12) thereby performs an ACTUAL/NOMINAL comparison.

6. Method according to claim 5, **characterized in that** the light source (2) shines through the diffuser (3).

## Revendications

1. Collimateur pour l'essai d'une caméra (6) comportant un boîtier de collimateur (1), le boîtier de collimateur (1) présentant une paroi longitudinale (8, 9) et deux parois frontales (10, 11), la première paroi frontale (10) présentant une source de lumière (2) et la seconde paroi frontale (11) présentant une lentille (5), un réticule (4) étant disposé entre la lentille (5) et la source de lumière, le réticule (4) étant disposé dans le boîtier de collimateur (1) en oblique par rapport à la lentille (5) et/ou en oblique par rapport à la paroi longitudinale (8, 9), **caractérisé en ce que** la paroi longitudinale (8, 9) présente une réflexion (13) qui est un agencement de miroirs entre un objectif de collimateur et la caméra (6) afin de diriger des rayons vers la caméra (6), lesquels rayons, sans optique à miroirs, n'atteindraient pas une pupille d'entrée de la caméra (6), la réflexion (13) s'étendant hors du boîtier de collimateur (1) vers la caméra (6).

2. Collimateur selon la revendication 1, **caractérisé en ce qu'**un diffuseur (3) est disposé entre le réticule (4) et la source de lumière (2).

3. Collimateur selon l'une quelconque des revendications précédentes, **caractérisé en ce que** la caméra (6) est connectée à un calculateur (12).

4. Collimateur selon l'une quelconque des revendications précédentes, **caractérisé en ce que** la caméra (6) peut être réglée.

5. Procédé pour l'essai d'une caméra (6) comportant un collimateur selon les revendications 1 à 4, **caractérisé par** les étapes suivantes :
- la source de lumière (2) éclaire le réticule (4) disposé en oblique ;
- la caméra (6) reçoit une image générée par le réticule (4) par l'intermédiaire de la lentille (5) ;
- la caméra (6) est déplacée vers la lentille (5) ou à l'écart de celle-ci, le calculateur (12) effectuant à cet effet une comparaison entre des valeurs de consigne et des valeurs réelles.

6. Procédé selon la revendication 5, **caractérisé en ce que** la source de lumière (2) éclaire à travers le diffuseur (3).
